# EUROPÄISCHE PATENTSCHRIFT

(11) **EP 2 810 095 B1**
(45) Veröffentlichungstag und Bekanntmachung des Hinweises auf die Patenterteilung: **06.11.2019**
(21) Anmeldenummer: 12808359.9
(22) Anmeldetag: 17.12.2012
(51) Int. Cl.: G01F 23/288, G01T 1/20, G01N 9/24

(54) **Radiometrisches Messgerät**
Radiometric measuring device
Appareil de mesure radiométrique

(30) Priorität: 31.01.2012 DE 102012100768
(43) Veröffentlichungstag der Anmeldung: 10.12.2014
(73) Patentinhaber: Endress+Hauser SE+Co. KG, 79689 Maulburg (DE)
(72) Erfinder: DAMM, Hartmut, 79331 Teningen (DE); WEIDENBRUCH, Simon, 79539 Lörrach (DE)
(74) Vertreter: Andres, Angelika Maria
(86) Internationale Anmeldenummer: PCT/EP2012/075784
(87) Internationale Veröffentlichungsnummer: WO 2013/113447

(56) Entgegenhaltungen:
- EP-A1- 1 912 045
- EP-A2- 2 354 809
- US-A- 3 717 760
- US-A- 5 629 515
- US-A1- 2009 026 375
- US-B1- 6 563 120

## Beschreibung

Die Erfindung betrifft ein radiometrisches Messgerät zur Messung und/oder Überwachung einer Messgröße, insb. eines Füllstands oder einer Dichte eines in einem Behälter befindlichen Füllguts, welches Messgerät einen Szintillationsdetektor mit zwei oder mehr in einer Reihe aneinander gereihten Szintillatoren, die darauf auftreffende radioaktive Strahlung in Lichtblitze umwandeln, deren Licht sich im jeweiligen Szintillator zu dessen Enden hin ausbreitet, zwischen den Szintillatoren angeordneten optischen Kopplungselementen, die eine Licht übertragende Verbindung zwischen den beiden daran angrenzenden Szintillatoren bewirken, und einem an ein Ende der Reihe angeschlossenen photo-elektrischen Wandler, der über die Reihe darauf auftreffendes Licht in ein einer auf die Szintillatoren auftreffenden Strahlungsintensität entsprechendes elektrisches Signal umwandelt.

Radiometrische Messgeräte werden üblicherweise immer dann eingesetzt, wenn herkömmliche Messgeräte aufgrund besonders rauer Bedingungen am Messort nicht einsetzbar sind. Sehr häufig herrschen z.B. am Messort extrem hohe Temperaturen und Drücke oder es sind chemisch und/oder mechanisch sehr aggressive Umgebungseinflüsse vorhanden, die den Einsatz anderer Messmethoden unmöglich machen.

Sie umfassen regelmäßig einen radioaktiven Strahler, der im Betrieb radioaktive Strahlung durch den Behälter sendet, und einen auf einer dem Strahler gegenüberliegenden Seite des Behälters angeordneten Detektor, der dazu dient eine durch den Behälter hindurch dringende von der Messgröße abhängige Strahlungsintensität zu empfangen und in ein elektrisches Signal umzuwandeln.

In der radiometrischen Messtechnik wird ein radioaktiver Strahler, z.B. ein Co₆₀ oder Cs₁₃₇ Präparat, in einen Strahlenschutzbehälter eingebracht und an einem Messort, z.B. einem mit einem Füllgut gefüllten Behälter angebracht. Ein solcher Behälter kann z.B. ein Tank, ein Container, ein Rohr, ein Förderband oder eine beliebige andere Behältnisform sein.

Der Strahlenschutzbehälter weist eine Ausnehmung auf, durch die die von dem zur Messung positionierten Strahler ausgesendete Strahlung durch eine Wand des Strahlenschutzbehälters hindurch ausgestrahlt wird.

Üblicherweise wird eine Abstrahlungsrichtung ausgewählt, bei der die Strahlung denjenigen Bereich des Behälters durchdringt, der messtechnisch erfasst werden soll. Auf der gegenüberliegenden Seite wird die durch eine Füllstands- bzw. Dichteänderung veränderte austretende Strahlungsintensität mit einem Detektor quantitativ erfasst. Die austretende Strahlungsintensität ist abhängig von der geometrischen Anordnung und der Absorption. Letztere ist bei der Füllstandsmessung abhängig von der Menge des im Strahlengang befindlichen Füllguts im Behälter und bei der Dichtemessung von der Dichte des durchstrahlten Füllguts. Folglich ist die austretende Strahlungsintensität ein Maß für den aktuellen Füllstand bzw. die aktuelle Dichte des Füllguts im Behälter.

Als Detektor werden heute üblicher Weise Szintillationsdetektoren mit einem massiven starren Szintillationstab eingesetzt, an dessen einem Ende endseitig ein photo-elektrischer Wandler, z.B. ein Photomultiplier, angeschlossen ist. Der Szintillationsstab besteht aus einem speziellen Kunststoff, wie z.B. Polystyrol (PS) oder Polyvinyltoluol (PVT), der optisch sehr rein ist. Gammastrahlung löst im Szintillationsmaterial Lichtblitze aus, deren Licht vom Photomultiplier erfasst und in elektrische Impulse umgesetzt wird. An den Photomultplier ist eine Messgerätelektronik angeschlossen, die anhand der elektrischen Impulse eine Impulsrate bestimmt, mit der die Impulse auftreten. Die Impulsrate ist abhängig von der Strahlungsintensität und somit ein Maß für die zu bestimmende Messgröße.

Szintillationsstäbe sind heute in Längen von ca. 0,4 m bis 2 m erhältlich. Reicht eine Länge von 2 m nicht aus, um den messtechnisch zu erfassenden Bereich abzudeckenden, können radiometrische Messgeräte mit zwei oder mehr Detektoren ausgestattet werden, die jeweils einen Teilbereich des messtechnisch zu erfassenden Bereichs abdecken.

Ein Beispiel hierzu ist in der DE 10 2004 007 680 A1 aufgeführt. Bei dem dort beschriebenen radiometrischen Messgerät ist jeder Detektor jeweils mit einem Szintillationsstab und einem endseitig daran angeschlossenen Photomultiplier ausgestattet. Jeder Detektor erzeugt eine der darauf auftreffenden Strahlungsintensität entsprechende Impulsrate, und es wird anhand der Impulsraten der einzelnen Detektoren ein Summensignal abgeleitet, dass der insgesamt über den von den Detektoren messtechnisch erfassten Messbereich auf die Detektoren auftreffenden Strahlungsintensität entspricht.

Diese Lösung weist den Vorteil auf, dass die einzelnen Detektoren flexibel angeordnet werden können und somit an die Platzvorgaben am Einsatzort, insb. an die Behältergeometrie angepasst werden können. Nachteilig ist allerdings, dass für jeden Detektor ein eigener photo-elektrischer Wandler erforderlich ist.

Eine alternative Lösung ist aus dem Deutschen Gebrauchsmuster DE 201 03 881 U1 bekannt. Dort ist ein Szintillationsdetektor für ein radiometrisches Messgerät zur Messung eines Füllstands eines in einem Behälter befindlichen Füllguts beschrieben, mit
- zwei oder mehr in einer Reihe aneinander gereihten Szintillatoren, die darauf auftreffende radioaktive Strahlung in Lichtblitze umwandeln, deren Licht sich im jeweiligen Szintillator zu dessen Enden hin ausbreitet,
- zwischen den Szintillatoren angeordneten optischen Kopplungselementen, die eine Licht übertragende Verbindung zwischen den beiden daran angrenzenden Szintillatoren bewirken, und
- einem an ein Ende der Reihe angeschlossenen photo-elektrischen Wandler, der über die Reihe darauf auftreffendes Licht in ein einer auf die Szintillatoren auftreffenden Strahlungsintensität entsprechendes elektrisches Signal umwandelt.

Die Szintillatoren sind in ein aus Segmenten aufgebautes Schutzrohr eingebracht.

In einer ersten in der DE 201 03 881 U1 beschriebenen Variante sind die Szintillatoren gerade Stäbe, die jeweils unter Zwischenfügung eines eine optische Kopplung bewirkenden Materials, insb. einer Silikonscheibe oder eines Silikonöls, in gerader Linie stirnseitig aufeinander gesetzt sind. Dabei tritt das Problem auf, dass unterschiedliche thermische Ausdehnungen der Szintillatoren und der Segmente des Schutzrohrs aufgefangen bzw. ausgeglichen werden müssen, um eine Beeinträchtigung der optischen Kopplung zwischen den aneinander gereihten Szintillatoren zu vermeiden. Dies wird in der beschriebenen Variante durch eine Feder bewirkt, die die Szintillatoren gegeneinander und den aus den Szintillatoren bestehenden geraden Stab insgesamt in Richtung des photo-elektrischen Wandlers presst.

Darüber hinaus ist eine zweite Variante beschrieben, bei der aus den einzelnen Szintillatoren ein abschnittsweise abgewinkelter Gesamtszintillator aufgebaut ist. Hierzu sind zwischen einzelnen Szintillatoren keilförmige Zwischenstücke eingesetzt. Als Zwischenstück ist eine keilförmige Silikonscheibe, sowie ein keilförmiger Lichtleiter beschrieben. Dabei sind die Stirnflächen des Lichtleiters über Silikonöl optisch an die Stirnflächen der daran angrenzenden Szintillatoren gekoppelt.

Auch hier tritt natürlich das Problem der unterschiedlichen thermischen Ausdehnung der Szintillatoren und der Segmente des Schutzrohrs auf, dass trotz der abschnittsweise abgewinkelten Form gelöst werden muss, um die optische Kopplung, insb. bei der Verwendung von Silikonöl, zu gewährleisten.

Darüber hinaus tritt hier das Problem auf, dass an den keilförmigen Zwischenstücken aufgrund der grundsätzlich gradlinigen Lichtausbreitung ein gewisser Anteil des zum angrenzenden Szintillator zu übertragenden Licht außenseitlich austreten wird. Ein Teil dieses Lichts tritt aufgrund der Richtungsänderung unmittelbar außenseitlich aus dem Zwischenstück aus. Ein weiterer Teil wird nach der Richtungsänderung durch das Zwischenstück die Außenflächen des nachfolgenden Szintillators nicht mehr unter dem Winkel der Totalreflektion treffen, und somit außenseitlich aus dem nachfolgenden Szintillator austreten. Der Anteil austretenden Lichts ist umso größer, je stärker die durch das jeweilige Zwischenstück bewirkte Abwinklung ist. Dieses Licht gelangt nicht zum photoelektrischen Wandler und kann somit messtechnisch nicht erfasst werden. Lichtverluste wirken sich unmittelbar nachteilig auf die Messempfindlichkeit des Messgeräts aus. Eine möglichst hohe Lichtausbeute ist jedoch gerade bei diesen Detektoren, bei denen Licht über mehrere in Reihe angeordneten einzelne Szintiallatoren eine größere Wegstrecke zurücklegt, besonders wichtig. Dementsprechend ist hier sowohl der Winkel, um den abgewinkelt werden kann, als auch die Anzahl der Abwinklungen begrenzt. Entsprechend sind auch die Anpassungsmöglichkeiten an räumliche Gegebenheiten am Einsatzort, wie z.B. runde Behälterformen, eng begrenzt.

Es ist eine Aufgabe der Erfindung ein radiometrisches Messgerät mit einem Szintillationsdetektor anzugeben, mit dem ein in Form und Länge möglichst flexibel vorgebbarer Messbereich abgedeckt werden kann.

Die Aufgabe der Erfindung wird durch die Merkmale von Anspruch 1 gelöst. Hierzu umfasst die Erfindung einen Szintillationsdetektor, mit
- zwei oder mehr in einer Reihe aneinander gereihten Szintillatoren, die darauf auftreffende radioaktive Strahlung in Lichtblitze umwandeln, deren Licht sich im jeweiligen Szintillator zu dessen Enden hin ausbreitet,
- zwischen den Szintillatoren angeordneten optischen Kopplungselementen, die eine Licht übertragende Verbindung zwischen den beiden daran angrenzenden Szintillatoren bewirken, und
- einem an ein Ende der Reihe angeschlossenen photo-elektrischen Wandler, der über die Reihe darauf auftreffendes Licht in ein einer auf die Szintillatoren auftreffenden Strahlungsintensität entsprechendes elektrisches Signal umwandelt.

Erfindungsgemäß ist mindestens eines der Kopplungselemente ein mechanisch flexibles Element, das ein Bündel aus Licht leitenden Fasern umfasst, über die die Übertragung des Lichts zwischen den beiden über die Fasern miteinander verbundenen Szintillatoren erfolgt.

Gemäß einer bevorzugten Ausgestaltung sind die Fasern Licht leitende Szinitillationsfasern.
Alternativ können die Fasern auch Glasfasern oder Kunststofflichtleiter sein.

Gemäß einer Weiterbildung sind beide Enden der Bündel jeweils in eine Fassung eingefasst, die über eine Zentrierhülse mit einem Ende des daran anzuschließenden Szintillators mechanisch verbindbar ist.

Gemäß einer Weiterbildung dieser Weiterbildung
- sind die Fasern der Bündel endseitig plan poliert, und
- liegen die polierten Enden der Bündel im montierten Zustand unter Zwischenfügung einer Koppelpaste jeweils auf einer plan polierten Stirnfläche des Endes des jeweils daran angrenzenden Szintillators auf.

Gemäß einer weiteren Weiterbildung
- ist ein modular aufgebautes Schutzrohr zur Aufnahme der Szintillatoren vorgesehen, und
- ist das Schutzrohr aus Segmenten zusammengesetzt, deren Innenräume an die räumlichen Abmessungen der aufzunehmenden Szintillatoren und der Kopplungselemente angepasst sind.

Gemäß einer Weiterbildung der letztgenannten Weiterbildung sind die zur Aufnahme der flexiblen Kopplungselemente vorgesehen Segmente als flexible Faltenbalge ausgebildet.

Gemäß einer bevorzugten Ausgestaltung ist das an dem vom photo-elektrischen Wandler abgewandten Ende des Schutzrohrs vorgesehene Segment als Verschlusskappe ausgebildet, die einen Innenraum des Schutzrohrs nach außen abschließt.

Gemäß einer weiteren Weiterbildung weisen die Fasern der Kopplungselemente eine geringe Überlänge auf, die größer gleich einer maximalen durch thermische Ausdehnungen in Abhängigkeit von der Temperatur bedingten Abstandsänderung zwischen den durch das jeweilige Kopplungselement miteinander verbundenen Szintillatoren ist.

Eine weitere Weiterbildung besteht darin, dass
- die Szintillatoren in einem Innenraum eines Schutzrohr angeordnet sind, dessen dem photo-elektrischen Wandler zugewandtes Ende mittels einer lichtdurchlässigen Durchführung, insb. einer Glasdurchführung, abgeschlossen ist,
- der photo-elektrischen Wandler in einem separaten Gehäuse angeordnet ist,
- das Gehäuse über eine lösbare mechanische Verbindung mechanisch auf dem Schutzrohr montierbar ist, und
- das Gehäuse eine lichtdurchlässige Durchführung, insb. eine Glasdurchführung, aufweist, über die der photo-elektrische Wandler optisch an die Reihe der Szintillatoren anschließbar ist.

Die Erfindung und weitere Vorteile werden nun anhand der Figuren der Zeichnung, in denen ein Ausführungsbeispiel dargestellt ist, näher erläutert; gleiche Teile sind in den Figuren mit gleichen Bezugszeichen versehen.
- Fig. 1 zeigt:: eine Füllstandsmessanordnung; und
- Fig. 2 zeigt:: einen erfindungsgemäßen Szintillationsdetektor.

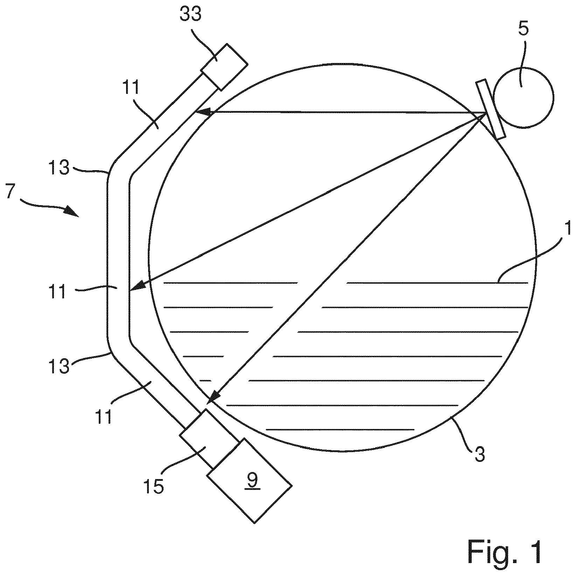

Die Erfindung betrifft einen Szintillationsdetektor für ein radiometrisches Messgerät zur Messung und/oder Überwachung einer Messgröße. Der Szintiallationsdetektor ist insb. in radiometrischen Füllstandsmessgeräten einsetzbar. Fig. 1 zeigt ein Ausführungsbeispiel einer Füllstandsmessanordnung mit einem solchen Füllstandsmessgerät.

Die Messanordnung umfasst einen mit einem Füllgut 1 befüllbaren Behälter 3 und einen außenseitlich am Behälter 3 montierten radioaktiven Strahler 5, der im Messbetrieb radioaktive Strahlung durch den Behälter 3 sendet. Der Strahler 5 umfasst einen Strahlenschutzbehälter, in den ein radioaktives Präparat, z.B. ein Co₆₀ oder Cs₁₃₇ Präparat, eingebracht ist. Der Strahlenschutzbehälter weist eine Öffnung auf, durch die die Strahlung in einer durch die Ausrichtung der Öffnung vorgegebenen Abstrahlrichtung austritt und den Behälter 3 durchstrahlt. Auf einer dem Strahler 5 gegenüberliegenden Seite des Behälters 3 ist ein erfindungsgemäßer Szintillationsdetektor 7 angeordnet. Der Szintillationsdetektor 7 dient dazu durch den Behälter 3 hindurch dringende von der Messgröße, hier dem Füllstand im Behälter 3, abhängige Strahlungsintensität über einen anwendungs-spezifisch vorgegebenen messtechnisch vom Szintillationsdetektor 7 zu erfassenden Bereich zu empfangen, und in ein der darauf auftreffenden Strahlungsintensität entsprechendes elektrisches Signal umzuwandeln. Letzteres steht dann einer an den Szintillationsdetektor 7 angeschlossenen Messelektronik 9 des radiometrischen Messgeräts zur weiteren Auswertung und/oder Verarbeitung zur Verfügung, die anhand des elektrischen Signals die Messgröße bestimmt. Der Szintillationsdetektor 7 umfasst zwei oder mehr aneinander gereihte Szintillatoren 11, die darauf auftreffende radioaktive Strahlung in Lichtblitze umwandeln. Die Szintillatoren 11 sind beispielsweise Szintillationsstäbe aus einem szintillierenden Kunststoff, wie z.B. Polystyrol (PS) oder Polyvinyltoluol (PVT), der optisch sehr rein ist. Gammastrahlung löst im Szintillationsmaterial Lichtblitze aus, deren Licht sich im jeweiligen Szintillator 11 zu dessen Enden hin ausbreitet.

Zwischen den Szintillatoren 11 ist jeweils ein optisches Kopplungselement 13 angeordnet, dass eine Licht übertragende Verbindung zwischen den beiden daran angrenzenden Szintillatoren 11 bewirkt.

An einem Ende der Reihe der aneinander gereihten Szintillatoren 11 ist ein photo-elektrischer Wandler 15 angeschlossen, der über die Reihe darauf auftreffendes Licht in ein einer auf die Szintillatoren 11 insgesamt auftreffenden Strahlungsintensität entsprechendes elektrisches Signal umwandelt. Hierzu eignet sich insb. ein Photomultiplier der darauf auftreffendes Licht erfasst und in elektrische Impulse umsetzt. Die Impulsrate dieser Impulse ist abhängig von der Strahlungsintensität und somit ein Maß für die zu bestimmende Messgröße. Der photo-elektrische Wandler 15 ist an die Messelektronik 9 angeschlossen, die dann beispielsweise anhand der Impulsrate den Füllstand des Füllguts 1 im Behälter 3 bestimmt.

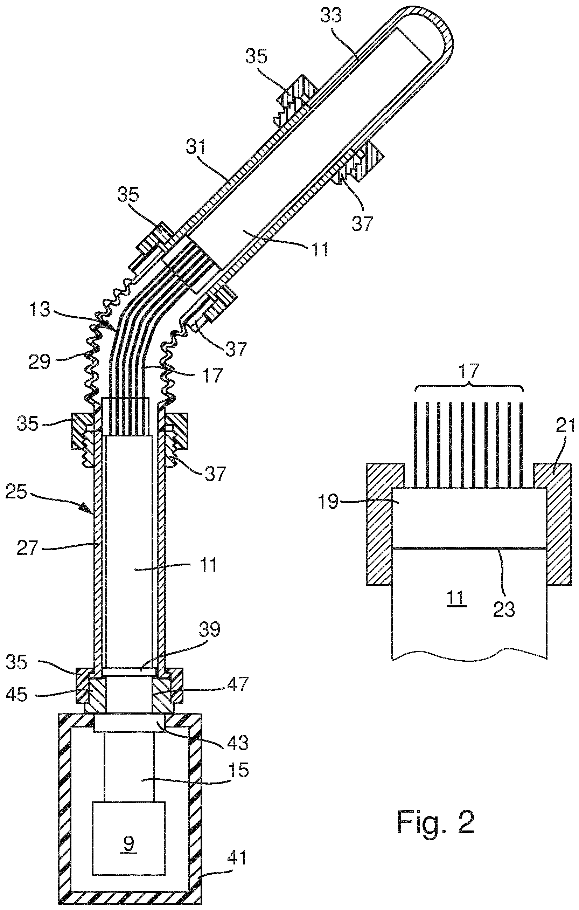

Fig. 2 zeigt ein Ausführungsbeispiel eines erfindungsgemäßen Szintillationsdetektor mit zwei über ein optisches Kopplungselement 13 mit einander verbundenen stabförmigen Szintillatoren 11. Auf die gleiche Weise können natürlich auch Szintillationsdetekoren mit drei oder mehr über Kopplungselemente 13 miteinander verbundenen Szintiallatoren 11 vorgesehen werden.

Erfindungsgemäß ist das Kopplungselement 13 ein mechanisch flexibles Element, das ein Bündel aus Licht leitenden Fasern 17 umfasst, über die die Übertragung des Lichts zwischen den beiden über die Fasern 17 miteinander verbundenen Szintillatoren 11 erfolgt.

Licht leitende Fasern 17 bietet den Vorteil, dass sie mechanisch flexibel sind und ihre Lichtübertragungseigenschaften weitgehend unabhängig von der räumlichen Ausrichtung der Fasern 17 sind.

Hierdurch wird ein hohes Maß an Biegsamkeit an der Verbindungsstelle erzielt, ohne dass hierdurch die Lichtübertragung zwischen den einzelnen über Kopplungselemente 13 verbundenen Szintillatoren 11 beeinträchtigt wird. Dabei ist der ohne wesentliche Lichtverluste realisierbare Grad der Biegung an jeder Verbindungsstelle umso größer, je geringer der Faserdurchmesser, bzw. die Faserdicke ist. Dabei sind durch entsprechende Ausrichtung und Anordnung der Fasern 17 unter Einhaltung des durch die Faserdicke bzw. des Faserdurchmessers vorgegebenen Biegeradius auch unter einem Winkel von 90° oder im Extremfall sogar von 180° verlaufende Lichtleitungspfade realisierbar.
Durch eine entsprechende Auswahl von Anzahl und Länge der einzelnen Szintillatoren 11, ist der erfindungsgemäße Szintillationsdetektor damit äußerst flexibel auf die vorgegebenen Gegebenheiten am Einsatzort anpassbar.

Dies bietet den Vorteil, dass mit den erfindungsgemäßen Szintillationsdetektoren in Form und Länge äußerst flexibel vorgebbare Messbereiche abgedeckt werden können, ohne dass in den Bereichen der Kopplungselemente 13, in denen die Ausbreitungsrichtung des zu übertragenden Lichts verändert wird, wesentliche Lichtverluste auftreten.

Vorzugsweise sind die Fasern 17 Licht leitende Szinitillationsfasern. Szinitillationsfasern sind im Handel erhältlich. Sie wandeln darauf auftreffende radioaktive Strahlung in Lichtblitze um, deren Licht sich innerhalb der jeweiligen Szintillationsfaser zu beiden Seiten bis zu deren Enden hin ausbreitet.
Entsprechend wird der sich in der Reihe in Richtung des photo-elektrischen Wandlers 15 ausbreitende Lichtanteil über die jeweilige Szintillationsfaser zum jeweils nächsten Szintillator 11, und von dort zum photo-elektrischen Wandler 15 übertragen. Szintillationsfasern bieten hier den Vorteil, dass auch auf die Kopplungselemente 13 auftreffende radioaktive Strahlung messtechnisch erfasst wird.

Alternativ können die Fasern 17 auch als reine Lichtleiter, insb. als Licht leitende Glasfasern oder Kunststofflichtleiter, ausgebildet sein. Diese, in der Regel kostengünstigere Variante, wird vorzugsweise in Detektoren eingesetzt, in denen der Längenanteil der Kopplungselemente 13 an der Länge des insgesamt vom Detektor abgedeckten Messbereichs gering ist.

Die beiden Enden des Bündels sind jeweils in eine Fassung 19 eingefasst, insb. eingeklebt, die über eine Zentrierhülse 21 mit dem jeweiligen Ende des daran anzuschließenden Szintillators 11 mechanisch, insb. durch Kleben, verbindbar ist. Dies ist in dem rechts neben dem Szintillationsdetektor abgebildeten heraus vergrößerten Ausschnitt in Fig. 2 dargestellt.

Zur Verbesserung der optischen Ankopplung sind sowohl die an die Kopplungselemente 13 angrenzenden Stirnflächen der Szintillatoren 11 als auch die Fasern 17 der Bündel endseitig plan poliert. Vorzugsweise wird auf die Stirnflächen der Szintillatoren 11 eine Koppelpaste 23 aufgetragen, so dass die polierten Enden des Bündels im montierten Zustand unter Zwischenfügung der Koppelpaste 23 auf der plan polierten Stirnfläche des Endes des jeweils daran angeschlossenen Szintillators 11 aufliegt.

Vorzugsweise umfasst der Szintillationsdetektor ein Schutzrohr 25 zur Aufnahme der aneinander gereihten Szintillatorren 11 und der Kopplungselemente 13. Das Schutzrohr 25 besteht beispielsweise aus Metall, und ist vorzugsweise modular aufgebaut. Hierzu ist es aus Segmenten 27, 29, 31, 33 zusammengesetzt, deren Innenräume an die räumlichen Abmessungen der jeweils darin aufzunehmenden Szintillatoren 11 und der Kopplungselemente 13 angepasst sind.

Die einzelnen Segmente 27, 29, 31, 33 sind vorzugsweise über Zentrierhülsen 35 lösbar mechanisch miteinander verbindbar. Das geschieht beispielsweise, indem jedes Segment 27, 29, 31, 33 mit einer an dessen Ende drehbar gehalterten mit einem Innengewinde ausgestatteten Zentrierhülse 35 versehen ist, die auf ein Außengewinde 37 des jeweils mechanisch damit zu verbindenden weiteren Segments 27, 29, 31 aufschraubbar ist.

In Verbindung mit dem Schutzrohr 25 bieten die erfindungsgemäßen Kopplungselemente 13, den Vorteil, dass keine besonderen zusätzlichen Vorkehrungen zum Auffangen oder Ausgleichen der unterschiedlichen thermischen Ausdehnungen der Szinitillatoren 11 und des Schutzrohrs 25 vorgesehen werden müssen. Stattdessen genügt es, wenn die Fasern 17 eine geringe Überlänge aufweisen, die größer gleich einer maximalen durch die unterschiedlichen thermischen Ausdehnungen in Abhängigkeit von der Temperatur auftretenden Abstandsänderung zwischen den jeweiligen miteinander verbundenen Szintillatoren 11 ist. Damit werden temperaturabhängige Belastungen der mechanischen Verbindungen zwischen den Kopplungselementen 13 und den jeweils damit verbundenen Szintillatoren 11 vermieden. Entsprechend ist die Qualität der hierüber gegebenen optische Ankopplung auch bei großen Temperaturschwankungen sichergestellt.

Die zur Aufnahme der Kopplungselemente 13 vorgesehenen Segmente 29, sind vorzugsweise - wie in Fig. 2 dargestellt- als flexible Faltenbalge ausgebildet. Die hierdurch gegebene zusätzliche Beweglichkeit erleichtert Transport und Montage des erfindungsgemäßen Szintillationsdetektors.

Das an dem vom photo-elektrischen Wandler 15 abgewandten freien Ende des Schutzrohrs 25 vorgesehene Segment 33 ist vorzugsweise als Verschlusskappe ausgebildet, die einen Innenraum des Schutzrohrs 25 nach außen abschließt.

Das an dem dem photo-elektrischen Wandler 15 zugewandten Ende des Schutzrohrs 25 vorgesehene Segment 27 ist vorzugsweise endseitig mittels einer in das Segmentende eingesetzten dichten lichtdurchlässigen Durchführung 39 verschlossen, auf deren Innenseite der dem photo-elektrischen Wandler 15 zugewandte Szintillator 11 der Reihe mit dessen Stirnseite aufgebracht, insb. aufgeklebt wird. Die Durchführung 39 ist beispielsweise eine Glasdurchführung.

Der photo-elektrische Wandler 15 ist vorzugsweise in einem separaten Gehäuse 41 angeordnet, das über eine lösbare mechanische Verbindung mechanisch auf dem Schutzrohr 25 montierbar ist. Darüber hinaus kann auch die Messelektronik 9 in dem Gehäuse 37 angeordnet sein. Der optische Anschluss des Wandlers 15 an die Reihe der Szintillatoren 11 erfolgt vorzugsweise über eine in einer Gehäusewand vorgesehene dichte lichtdurchlässige Durchführung 43, insb. eine Glasdurchführung. Hierzu kann der photo-elektrische Wandler 15 im Gehäuse 41 unmittelbar auf der Innenseite der Durchführung 43 aufgebracht sein. Auf dem Gehäuse 41 ist ein die Durchführung 43 umgebendes zylindrisches Anschlussstück 45 vorgesehen, dessen Innenraum von einem Lichtleiter 47, wie z.B. einer Silikonscheibe, ausgefüllt ist.

Gehäuse 41 und Messrohr 25 sind vorzugsweise auf mechanisch lösbare Weise miteinander verbunden. Hierzu ist die Zentrierhülse 35 des dem Gehäuse 41 zugewandten Segments 27 des Schutzrohrs 25 derart auf das Anschlussstück 45 aufgeschraubt, dass die das Segment 27 endseitig abschließende Durchführung 39 auf dem Lichtleiter 47 aufliegt. Zur Verbesserung der optischen Ankopplung ist zwischen Durchführung 39 und Lichtleiter 47 eine Koppelpaste vorgesehen.

Damit ist ein insgesamt modularer Aufbau des Szintillationsdetektors gegeben. Insb. kann das Gehäuse 41 vom Schutzrohr 25 und den darin befindlichen aneinander gereihten Szintillatoren 11 ohne Öffnung der Innenräume von Gehäuse 41 und Schutzrohr 25 getrennt werden. Hierdurch sind Austausch, Reparatur und/oder Wartung des photo-elektrischen Wandlers 15 und der Messelektronik 9 durchführbar, ohne dass die Reihe der Szintillatoren 11 beeinträchtigt wird oder sogar vom Messort entfernt werden muss.
- 1: Füllgut
- 3: Behälter
- 5: Strahler
- 7: Szintillationsdetektor
- 9: Messelektronik
- 11: Szintillator
- 13: Kopplungselement
- 15: photo-elektrischer Wandler
- 17: Licht leitende Faser
- 19: Fassung
- 21: Zentrierhülse
- 23: Koppelpaste
- 25: Schutzrohr
- 27: Segment
- 29: Segment
- 31: Segment
- 33: Segment
- 35: Zentrierhülse
- 37: Außengewinde
- 39: Durchführung
- 41: Gehäuse
- 43: Durchführung
- 45: Anschlussstück
- 47: Lichtleiter

## Patentansprüche

1. Radiometrisches Messgerät zur Messung und/oder Überwachung einer Messgröße, insb. eines Füllstands oder einer Dichte eines in einem Behälter (3) befindlichen Füllguts (1), welches Messgerät einen Szintillationsdetektor mit
- zwei oder mehr in einer Reihe aneinander gereihten Szintillatoren (11), die darauf auftreffende radioaktive Strahlung in Lichtblitze umwandeln, deren Licht sich im jeweiligen Szintillator (11) zu dessen Enden hin ausbreitet,
- zwischen den Szintillatoren (11) angeordneten optischen Kopplungselementen (13), die eine Licht übertragende Verbindung zwischen den beiden daran angrenzenden Szintillatoren (11) bewirken, und
- einem an ein Ende der Reihe angeschlossenen photo-elektrischen Wandler (15), der über die Reihe darauf auftreffendes Licht in ein einer auf die Szintillatoren (11) auftreffenden Strahlungsintensität entsprechendes elektrisches Signal umwandelt
umfasst,
**dadurch gekennzeichnet, dass**
mindestens eines der Kopplungselemente (13) ein mechanisch flexibles Element ist, das ein Bündel aus Licht leitenden Fasern (17) umfasst, über die die Übertragung des Lichts zwischen den beiden über die Fasern (17) miteinander verbundenen Szintillatoren (11) erfolgt.

2. Radiometrisches Messgerät nach Anspruch 1, **dadurch gekennzeichnet, dass**
die Fasern (17) Licht leitende Szinitillationsfasern sind.

3. Radiometrisches Messgerät nach Anspruch 1, **dadurch gekennzeichnet, dass**
die Fasern (17) Glasfasern oder Kunststofflichtleiter sind.

4. Radiometrisches Messgerät nach Anspruch 1, **dadurch gekennzeichnet, dass**
beide Enden der Bündel jeweils in eine Fassung (19) eingefasst sind, die über eine Zentrierhülse (21) mit einem Ende des daran anzuschließenden Szintillators (11) mechanisch verbindbar ist.

5. Radiometrisches Messgerät nach Anspruch 4, **dadurch gekennzeichnet, dass**
- die Fasern (17) der Bündel endseitig plan poliert sind, und
- die polierten Enden der Bündel im montierten Zustand unter Zwischenfügung einer Koppelpaste (23) jeweils auf einer plan polierten Stirnfläche des Endes des jeweils daran angrenzenden Szintillators (11) aufliegen.

6. Radiometrisches Messgerät nach Anspruch 1, **dadurch gekennzeichnet, dass**
- ein modular aufgebautes Schutzrohr (25) zur Aufnahme der Szintillatoren (11) vorgesehen ist, und
- das Schutzrohr (25) aus Segmenten (27, 29, 31, 33) zusammengesetzt ist, deren Innenräume an die räumlichen Abmessungen der aufzunehmenden Szintillatoren (11) und der Kopplungselemente (13) angepasst sind.

7. Radiometrisches Messgerät nach Anspruch 6, **dadurch gekennzeichnet, dass**
die zur Aufnahme der flexiblen Kopplungselemente (13) vorgesehen Segmente (29) als flexible Faltenbalge ausgebildet sind.

8. Radiometrisches Messgerät nach Anspruch 1, **dadurch gekennzeichnet, dass**
das an dem vom photo-elektrischen Wandler (15) abgewandten Ende des Schutzrohrs (25) vorgesehene Segment (33) als Verschlusskappe ausgebildet ist, die einen Innenraum des Schutzrohrs (25) nach außen abschließt.

9. Radiometrisches Messgerät nach Anspruch 1, **dadurch gekennzeichnet, dass** die Fasern (17) der Kopplungselemente (13) eine geringe Überlänge aufweisen, die größer gleich einer maximalen durch thermische Ausdehnungen in Abhängigkeit von der Temperatur bedingten Abstandsänderung zwischen den durch das jeweilige Kopplungselement (13) miteinander verbundenen Szintillatoren (11) ist.

10. Radiometrisches Messgerät nach Anspruch 1, **dadurch gekennzeichnet, dass**
- das die Szintillatoren (11) in einem Innenraum eines Schutzrohr (25) angeordnet sind, dessen dem photo-elektrischen Wandler (15) zugewandten Ende mittels einer lichtdurchlässigen Durchführung (39), insb. einer Glasdurchführung, abgeschlossen ist,
- der photo-elektrischen Wandler (15) in einem separaten Gehäuse (41) angeordnet ist,
- das Gehäuse (41) über eine lösbare mechanische Verbindung mechanisch auf dem Schutzrohr (25) montierbar ist, und
- das Gehäuse (41) eine lichtdurchlässige Durchführung (43), insb. eine Glasdurchführung, aufweist, über die der photo-elektrische Wandler (15) optisch an die Reihe der Szintillatoren (11) anschließbar ist.

## Claims

1. Radiometric measuring device for measuring and/or monitoring a measured variable, particularly a level or a density of a medium (1) located in a vessel (3), said measuring device comprising a scintillation detector with
- two or more scintillators (11) arranged beside one another in a row which convert radioactive radiation acting on the scintillator to flashes of light whose light propagates in the scintillator (11) to the end of the scintillator,
- optical coupling elements (13) arranged between the scintillators (11), which cause a connection that transmits light between the two scintillators (11) adjacent to the element, and
- a photoelectric converter (15) connected to an end of the series which converts the light that acts on the row into an electrical signal that corresponds to the radiation intensity acting on the scintillators (11),
**characterized in that**
at least one of the coupling elements (13) is a mechanically flexible element which comprises a bundle of fibers (17) that conduct light, via which the light is transmitted between the two scintillators (11) which are interconnected via the fibers (17).

2. Radiometric measuring device as claimed in Claim 1, **characterized in that** the fibers (17) are light-conducting scintillator fibers.

3. Radiometric measuring device as claimed in Claim 1, **characterized in that** the fibers (17) are glass fibers or plastic optical fibers.

4. Radiometric measuring device as claimed in Claim 1, **characterized in that** the two ends of the bundles are each incorporated in a receptacle (19), which can be mechanically connected to an end of the adjacent scintillator (11) via a centering sleeve (21).

5. Radiometric measuring device as claimed in Claim 4, **characterized in that**
- the fibers (17) of the bundles are planar polished at the end, and **in that**
- when mounted, the polished ends of the bundles rest in each case, with the addition of a coupling paste (23), on a planar polished front face of the end of the corresponding adjacent scintillator (11).

6. Radiometric measuring device as claimed in Claim 1, **characterized in that**
- a modular protective tube (25) designed to receive the scintillators (11) is provided, and
- **in that** the protective tube (25) consists of segments (27, 29, 31, 33) whose interior areas are adapted to the spatial dimensions of the scintillators (1) and coupling elements (13) to be received.

7. Radiometric measuring device as claimed in Claim 6, **characterized in that** the segments (29) provided to receive the flexible coupling elements (13) are designed as flexible protective bellows.

8. Radiometric measuring device as claimed in Claim 1, **characterized in that** the segment (33) provided at the end of the protective tube (25) facing away from the photoelectric converter (15) is designed as a sealing cap which seals an interior area of the protective tube (25) towards the outside.

9. Radiometric measuring device as claimed in Claim 1, **characterized in that** the fibers (17) of the coupling elements (13) have a slight extra length which is greater than or equal to a maximum change in distance, which is caused by thermal expansions, as a function of the temperature, between the scintillators (11) which are interconnected by means of the respective coupling element (13).

10. Radiometric measuring device as claimed in Claim 1, **characterized in that**
- the scintillators (11) are arranged in an interior area of a protective tube (25) whose end that faces towards the photoelectric converter (15) is sealed by a translucent bushing (39), particularly a glass bushing,
- the photoelectric converter (15) is arranged in a separate housing (41),
- the housing (41) can be mounted mechanically on the protective tube (25) by means of a detachable mechanical connection, and
- the housing (41) has a translucent bushing (43), particularly a glass bushing, via which the photoelectric converter (15) can be optically connected to the row of scintillators (11).

## Revendications

1. Appareil de mesure radiométrique destiné à la mesure et/ou à la surveillance d'une grandeur de mesure, notamment un niveau ou une densité d'un produit (1) se trouvant dans un réservoir (3), lequel appareil de mesure comprend un détecteur à scintillation avec
- deux scintillateurs (11) ou plus, disposés en série dans une rangée, qui convertissent le rayonnement radioactif y incident en éclairs lumineux, dont la lumière se propage dans le scintillateur (11) respectif jusqu'à son extrémité,
- des éléments de couplage optiques (13) disposés entre les scintillateurs (11), qui génèrent une liaison transmettant la lumière entre les deux scintillateurs (11) y attenant, et
- un convertisseur photoélectrique (15) raccordé à une extrémité de la rangée, lequel convertisseur convertit la lumière incidente sur la rangée en un signal électrique correspondant à l'intensité de rayonnement incidente sur les scintillateurs (11),
**caractérisé**
**en ce qu'**au moins l'un des éléments de couplage (13) est un élément mécaniquement flexible, qui comprend un faisceau de fibres (17) guidant la lumière, par l'intermédiaire desquels s'effectue la transmission de la lumière entre les deux scintillateurs (11) reliés entre eux par le biais des fibres (17).

2. Appareil de mesure radiométrique selon la revendication 1, **caractérisé en ce que** les fibres (17) sont des fibres de scintillateur guidant la lumière.

3. Appareil de mesure radiométrique selon la revendication 1, **caractérisé en ce que** les fibres (17) sont des fibres de verre ou des fibres optiques en matière plastique.

4. Appareil de mesure radiométrique selon la revendication 1, **caractérisé en ce que** les deux extrémités des faisceaux sont intégrées dans une monture (19), qui peut être reliée mécaniquement par l'intermédiaire de la douille de centrage (21) avec une extrémité du scintillateur (11) devant y être raccordé.

5. Appareil de mesure radiométrique selon la revendication 4, **caractérisé en ce que**
- les fibres (17) des faisceaux sont planarisés en leur extrémité, et **en ce que**
- les extrémités polies des faisceaux reposent, à l'état monté, avec l'ajout d'une pâte de couplage (23) respectivement sur une surface frontale planarisée de l'extrémité du scintillateur (11) correspondant y attenant.

6. Appareil de mesure radiométrique selon la revendication 1, **caractérisé**
- **en ce qu'**est prévu un tube de protection (25) de structure modulaire destiné à la réception des scintillateurs (11), et
- **en ce que** le tube de protection (25) est composé de segments (27, 29, 31, 33), dont les espaces intérieurs sont adaptés aux dimensions spatiales des scintillateurs (1) et des éléments de couplage (13) à recevoir.

7. Appareil de mesure radiométrique selon la revendication 6, **caractérisé en ce que** les segments (29) prévus pour la réception des éléments de couplage (13) flexibles sont conçus en tant que soufflets flexibles.

8. Appareil de mesure radiométrique selon la revendication 1, **caractérisé en ce que** le segment (33) prévu à l'extrémité du tube de protection (25) située à l'opposé du convertisseur photoélectrique (15) est conçu en tant qu'obturateur, qui obture un espace intérieur du tube de protection (25) vers l'extérieur.

9. Appareil de mesure radiométrique selon la revendication 1, **caractérisé en ce que** les fibres (17) des éléments de couplage (13) présentent une faible surlongueur, qui est supérieure ou égale à une modification de la distance - due à des dilatations thermiques en fonction de la température - entre les scintillateurs (11) reliés entre eux par l'élément de couplage (13) respectif.

10. Appareil de mesure radiométrique selon la revendication 1, **caractérisé en ce que**
- les scintillateurs (11) sont disposés dans un espace intérieur d'un tube de protection (25), dont l'extrémité faisant face au convertisseur photoélectrique (15) est terminée au moyen d'une traversée (39) perméable à la lumière, notamment une traversée en verre,
- le convertisseur photoélectrique (15) est disposé dans un boîtier séparé (41),
- le boîtier (41) peut être monté mécaniquement au moyen d'une liaison mécanique amovible sur le tube de protection (25), et
- le boîtier (41) comporte une traversée (43) perméable à la lumière, notamment une traversée en verre, à travers laquelle le convertisseur photoélectrique (15) peut être raccordé par voie optique à la rangée de scintillateurs (11).
